# EUROPEAN PATENT SPECIFICATION

(11) **EP 1 071 903 B1**
(45) Date of publication and mention of the grant of the patent: **22.05.2002**
(21) Application number: 99910491.2
(22) Date of filing: 15.03.1999
(51) Int. Cl.: F16L 58/10, F16L 59/02, F16L 55/033

(54) **FLEXIBLE PROTECTIVE SLEEVE**
BIEGSAME SCHUTZHÜLSE
GAINE DE PROTECTION FLEXIBLE

(30) Priority: 18.04.1998 GB 9808288
(43) Date of publication of application: 31.01.2001
(73) Proprietor: Federal-Mogul Technology Limited, Rugby, Warwickshire CV22 7SA (GB)
(72) Inventor: MOLLOY, John, Coventry, West Midlands CV2 2PW (GB)
(74) Representative: Drury, Peter Lawrence
(86) International application number: GB9900764
(87) International publication number: WO9954653

(56) References cited:
- EP-A- 0 865 130
- WO-A-92/11324
- US-A- 4 748 060
- US-A- 5 597 522

## Description

This invention is concerned with a flexible protective sleeve for use in protecting an elongated member, such as a wire, a bundle of wires, or a pipe. Such sleeves, conventionally, comprise a generally tubular wall for at least substantially surrounding the member. Such sleeves need to be flexible enough to bend without distorting, ie without kinking.

Conventionally, flexible protective sleeves are used for protecting wires or pipes from contact with other components to avoid undesirable noise generation and/or abrasion damage. Such sleeves may also act to protect a member from heat. Such sleeves are used, for example, in the engine compartments of vehicles. Some flexible protective sleeves have a longitudinal slit in their wall to enable the sleeve to be installed over an elongated member which is already in situ.

In particular, this invention is concerned with a flexible protective sleeve of the convoluted type which has its wall formed from sheet plastics material which is formed into convolutions to increase flexibility, ie the wall has a diameter which varies in a regular manner along the length of the sleeve so that the exterior surface has a series of annular crests separated by troughs. When the sleeve bends, the crests move further apart on the outside of the curve and closer together on the inside of the curve.

Flexible protective sleeves of the convoluted type are manufactured by extruding plastics material, eg polyethylene or nylon, in the form of a tube of constant diameter. While the plastics material is still malleable, this tube is introduced into a die which defines a forming surface which is the inverse of the shape desired for the sleeve. The tube is then expanded either by interior air pressure or by exterior suction so that the wall of the tube is forced against and into conformity with said forming surface.

Although flexible protective sleeves of the convoluted type are effective in protecting elongated members contained therein from abrasion damage and, in many cases, reduce noise, the sleeves themselves can also be a source of noise, since they may vibrate against adjacent components or against the elongated member. Accordingly, various proposals have been made for reducing this noise. For example, the problem of reducing noise from such sleeves has been considered in EP 0 556 140 B where the proposed solution is to cover the wall of the sleeve with a strip of sound-insulating material, eg felt, which is adhered to the wall of the sleeve. The strip covers the outer surface of the wall and passes through a slit to cover the inner surface of the wall. Thus, the strip can cushion impacts between the outer surface of the wall and adjacent components and also impacts between the inner surface of the wall and the elongated member. However, the use of such a strip has the disadvantages that: the process of applying the strip is complex; the strip can only be applied externally in cases where the sleeve has no slit; the strip may absorb liquids; and the strip may become detached in service.

It is an object of the present invention to provide a flexible protective sleeve of the convoluted type in which noise reduction is achieved without the disadvantages mentioned above.

The invention provides a flexible protective sleeve for use in protecting an elongated member, the sleeve comprising a generally tubular wall for at least substantially surrounding the member, the wall being formed from sheet plastics material and being convoluted, characterised in that said plastics material contains 2 to 10 percent by weight of hollow microspheres.

It is found that a sleeve according to the invention produces less noise than a conventional sleeve in both external and internal rattling tests.

The applicants have considered forming a flexible protective sleeve from foamed plastics material in order to improve acoustic properties of the sleeve. However, attempts to produce a sleeve containing gas bubbles failed due to the collapse of the bubbles when the plastics material wall was pressed against the convoluting die. Surprisingly, it is found that the microspheres are not flattened during the convolution-forming stage of the manufacture of the sleeve and are present in the finished sleeve. A sleeve according to the invention is simple to manufacture, will not absorb liquids, has improved acoustic properties both externally and internally, even where there is no slit in the sleeve, and is lighter than conventional sleeves.

Preferably the quantity of microspheres is between 4 and 6 percent by weight.

Suitable microspheres are available commercially which are made of vinyldene chloride/acrylonitrile copolymer. Such microspheres can be obtained in an unexpanded condition having a diameter of about 10 microns and containing iso-butyl liquid or in an expanded condition in which the iso-butyl has expanded as spheres to a diameter of approximately 40 microns. If unexpanded microspheres are used, they can be caused to expand in an extruder which produces the extruded tube from which the sleeve is formed. Preferably, the microspheres are formed into a master batch of a compatible polymer which is then mixed into the plastics material. For example, the master batch may be 65% by weight unexpanded microspheres and 35 percent by weight of a polymer such as ethylene vinylacetate.

The microspheres, preferably, have diameters in the range between 10 microns and 40 microns.

The plastics material may be a polyolefin, such as polypropylene or polyethylene. The plastics material may also be polystyrene, polyvinyl chloride or a thermo-plastic elastomer.

There now follows a detailed description to be read with reference to the accompanying drawings of a flexible protective sleeve which is illustrative of the invention.

In the drawings:
Figure 1 is a side elevational view of a portion of the illustrative protective sleeve;
Figure 2 is a longitudinal cross-sectional view, on a larger scale than Figure 1, of a portion of the wall of the illustrative sleeve; and
Figure 3 is an enlarged view-of the portion of Figure 2 which is circled.

The illustrative protective sleeve 10 is formed from polyethylene into which a master batch of 65 percent by weight of microspheres and ethylene vinylacetate was mixed. The master batch formed 4 percent by weight of the mixture. The microspheres were unexpanded hollow spheres formed of vinyldene chloride/acrylonitrile copolymer and having a diameter of 10 microns. The mixture was extruded into a hollow cylindrical tube, having a wall-thickness of about 0.5mm, and the tube was expanded into contact with a convoluting die. The microspheres expanded to a diameter of approximately 40 microns in the extruder.

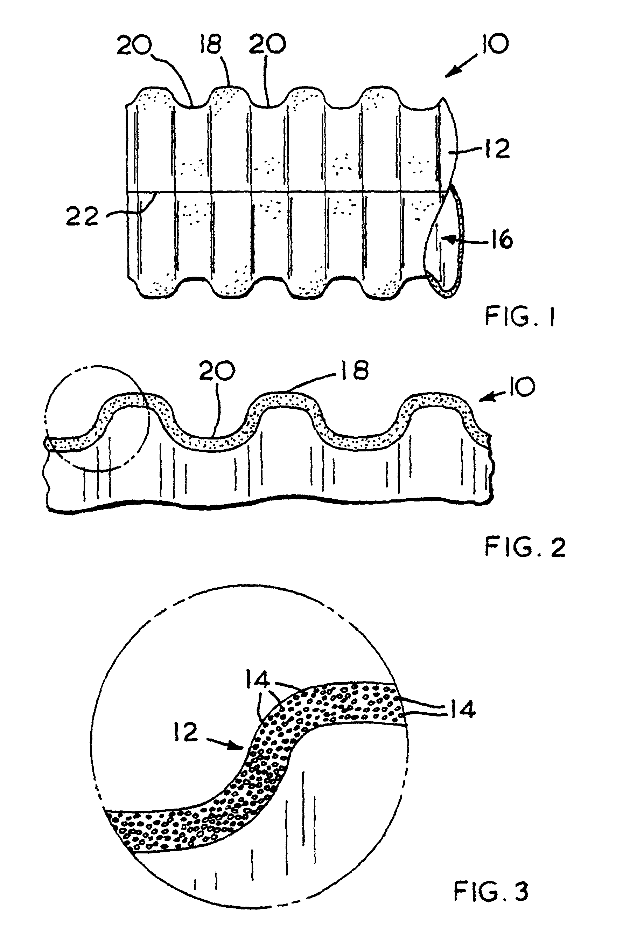

The illustrative sleeve 10 has a wall 12 which is generally tubular enclosing a space 16 in which an elongated member can be contained. The wall 12 is formed from sheet plastics material which is formed into convolutions. The convolutions have annular crests 18 separated by annular troughs 20. The wall 12 has a longitudinally-extending slit 22 which enables a member to be inserted into the space 16. As shown in figure 3, the wall 12 contains microspheres 14.

The illustrative sleeve 10 was subjected to noise tests in comparison with a similar sleeve formed from polyethylene without any microspheres. In an internal rattling test in which the sleeves were placed on a mandrel, the noise level for the sleeve 10 was 60.8 decibels and that for the comparison sleeve was 69.5 decibels. In an internal rattling test in which the sleeves were placed on a bundle of wires, the noise level for the sleeve 10 was 58.0 decibels and that for the comparison sleeve was 62.7 decibels. In an external ratting test in which the sleeves were rattled against a vibrating plate, the noise level for the sleeve 10 was 48.5 decibels and that for the comparison sleeve was 52.5 decibels.

## Claims

1. A flexible protective sleeve (10) for use in protecting an elongated member, the sleeve comprising a generally tubular wall (12) for at least substantially surrounding the member, the wall (12) being formed from sheet plastics material and being convoluted, **characterised in that** said plastics material contains 2 to 10 percent by weight of hollow microspheres (14).

2. A sleeve according to claim 1, **characterised in that** the plastics material contains 4 to 6 percent by weight of hollow microspheres (14).

3. A sleeve according to either one of claims 1 and 2, **characterised in that** the microspheres (14) are made of vinyldene chloride/acrylonitrile copolymer.

4. A sleeve according to any one of claims 1 to 3, **characterised in that** the microspheres (14) have diameters in the range between 10 microns and 40 microns.

5. A sleeve according to any one of claims 1 to 4, **characterised in that** the plastics material is a polyolefin.

## Patentansprüche

1. Biegsame Schutzhülse (10) zur Verwendung beim Schutz eines länglichen bzw. langen Glieds bzw. Elements, wobei die Hülse eine allgemein rohrförmige Wand (12) aufweist, um wenigstens im wesentlichen das Element zu umgeben, wobei die Wand (12) aus blattförmigem Kunststoffmaterial gebildet ist und übereinandergerollt bzw. - gewickelt ist, **dadurch gekennzeichnet, daß** das Kunststoffmaterial 2 bis 10 Gew.-% hohle Mikrokugeln (14) umfaßt.

2. Hülse nach Anspruch 1, **dadurch gekennzeichnet, daß** das Kunststoffmaterial 4 bis 6 Gew.-% hohle Mikrokugeln (14) umfaßt.

3. Hülse nach einem der Ansprüche 1 oder 2, **dadurch gekennzeichnet, daß** die Mikrokugeln (14) aus Vinylidenchlorid/Acrylnitril-Copolymer gefertigt sind.

4. Hülse nach einem der Ansprüche 1 bis 3, **dadurch gekennzeichnet, daß** die Mikrokugeln (14) Durchmesser im Bereich zwischen 10 µm und 40 µm aurweisen.

5. Hülse nach einem der Ansprüche 1 bis 4, **dadurch gekennzeichnet, daß** das Kunststoffmaterial ein Polyolefin ist.

## Revendications

1. Manchon protecteur flexible (10) pour utilisation dans la protection d'un élément allongé, le manchon comprenant une paroi généralement tubulaire (12) pour entourer au moins sensiblement l'élément, la paroi (12) étant constituée d'une feuille de matière plastique et présentant des circonvolutions, **caractérisé en ce que** ladite matière plastique renferme de 2 à 10 % en poids de microsphères creuses (14).

2. Manchon selon la revendication 1, **caractérisé en ce que** la matière plastique renferme de 4 à 6 % en poids de microsphères creuses (14).

3. Manchon selon l'une quelconque des revendications 1 et 2, **caractérisé en ce que** les microsphères (14) sont constituées d'un copolymère chlorure de vinylidène/acrylonitrile.

4. Manchon selon l'une quelconque des revendications 1 à 3, **caractérisé en ce que** les microsphères (14) ont des diamètres dans la plage de 10 micromètres à 40 micromètres.

5. Manchon selon l'une quelconque des revendications 1 à 4, **caractérisé en ce que** la matière plastique est une polyoléfine.
